(19) Europäisches Patentamt / European Patent Office / Office européen des brevets

(11) **EP 3 875 924 A1**

(12) **EUROPEAN PATENT APPLICATION**

(43) Date of publication:
08.09.2021 Bulletin 2021/36

(21) Application number: 21157339.9

(22) Date of filing: 16.02.2021

(51) Int Cl.:
*G01H 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.03.2020 JP 2020034943

(71) Applicant: **MITSUBISHI HEAVY INDUSTRIES, LTD.**
**Chiyoda-ku,**
**Tokyo 100-8332 (JP)**

(72) Inventor: **OHIRA, Takeo**
**Tokyo, 100-8332 (JP)**

(74) Representative: **Studio Torta S.p.A.**
**Via Viotti, 9**
**10121 Torino (IT)**

(54) **VIBRATION MEASUREMENT DEVICE AND ROTATING OBJECT INCLUDING THE SAME**

(57) Problem

Provided are a vibration measurement device and a rotating object including the vibration measurement device that can measure vibration in an axis line direction, torsional vibration, and inclination of a rotation surface.

Solving Means

A vibration measurement device (10) includes a first sensor (11) provided at a measurement surface (25) substantially orthogonal to a rotational axis line (C) of a rotating object and configured to measure accelerations along an x1 axis, a y1 axis and a z1 axis orthogonal to each other, and a second sensor (12) provided at the measurement surface (25) such that the second sensor (12) is rotationally symmetrical with respect to the first sensor (11) by 180 degrees about the rotational axis line (C) and configured to measure accelerations along an x2 axis, a y2 axis and a z2 axis orthogonal to each other.

FIG. 2

EP 3 875 924 A1

## Description

Technical Field

The present disclosure relates to a vibration measurement device and a rotating object including the same.

Background Art

For example, in order to measure vibration of a rotary shaft provided in a rotary machine such as an engine, a turbocharger or a turbine, a method that uses a contactless sensor (such as a displacement gauge or a speedometer) installed on the static side of the rotary machine to measure vibration of the rotary shaft is known.

The method disclosed in PTL 1, for example, is also known as a method for measuring vibration of a rotary shaft. PTL 1 discloses a configuration in which a rotor case provided with an accelerometer for vertical vibration and an accelerometer for torsional vibration is attached to a rotary shaft.

Citation List

Patent Literature

PTL 1: Japanese Patent Application Laid-Open No. 2010-160105

Summary of Invention

Technical Problem

However, when measuring the vibration of a large rotary machine that generates relatively large vibration such as an engine, the contactless sensor on the static side may be vibrated and measurement accuracy may be affected, depending on the installation state of the sensor, for example. In order to deal with this problem, there is a method in which the acceleration of the portion where the sensor is installed is measured and converted to perform correction for the purpose of reducing the influence of vibration on the static side, but this method has low accuracy because different physical quantities are converted for correction.

In particular, the accelerometer for vertical vibration and the accelerometer for torsional vibration disclosed in PTL 1 cannot measure phenomena specific to the rotary shaft (such as the inclination or partial displacement of the rotation surface).

In light of the above-described circumstances, an object of the present disclosure is to provide a vibration measurement device and a rotating object including the vibration measurement device that can measure vibration in an axis line direction, torsional vibration, and inclination of a rotation surface.

Solution to Problem

To solve the above-described problems, the vibration measurement device and the rotating object including the vibration measurement device of the present disclosure employ the following configurations.

Specifically, a vibration measurement device according to an aspect of the present disclosure includes a first sensor provided at a measurement surface that is substantially orthogonal to a rotational axis line of a rotating object, the first sensor being configured to measure accelerations along an x1 axis, a y1 axis and a z1 axis that are orthogonal to each other, and a second sensor provided at the measurement surface such that the second sensor is rotationally symmetrical with respect to the first sensor by 180 degrees about the rotational axis line, the second sensor being configured to measure accelerations along an x2 axis, a y2 axis and a z2 axis that are orthogonal to each other.

In addition, a rotating object according to an aspect of the present disclosure includes the above-mentioned vibration measurement device.

Advantageous Effects of Invention

According to the present disclosure, it is possible to provide a vibration measurement device and a rotating object including the vibration measurement device that can measure vibration in an axis line direction, torsional vibration, and inclination of a rotation surface.

Brief Description of Drawings

FIG. 1 is a schematic configuration diagram of an engine attached to a vibration measurement device according to an embodiment of the present disclosure.

FIG. 2 is a front view of a measurement surface attached to the vibration measurement device according to the embodiment of the present disclosure.

FIG. 3 is a plan view of the measurement surface attached to the vibration measurement device according to the embodiment of the present disclosure.

FIG. 4 is a diagram illustrating acceleration and angular acceleration acting on the measurement surface illustrated in FIG. 2.

FIG. 5 is a diagram illustrating acceleration and angular acceleration acting on the measurement surface illustrated in FIG. 3.

FIG. 6 is a graph illustrating comparison among measured values.

FIG. 7 is a graph illustrating comparison among peak positions of vibration.

Description of Embodiments

A vibration measurement device according to an embodiment of the present disclosure and a rotating object including the vibration measurement device are described below with reference to the accompanying drawings.

A vibration measurement device 10 measures the vibration behavior of a rotating object of a rotary machine (such as a crankshaft 21 of an engine 20).

A specific configuration of the vibration measurement device 10 is described below.

First, the rotary machine to be measured is described using the engine 20 as an example.

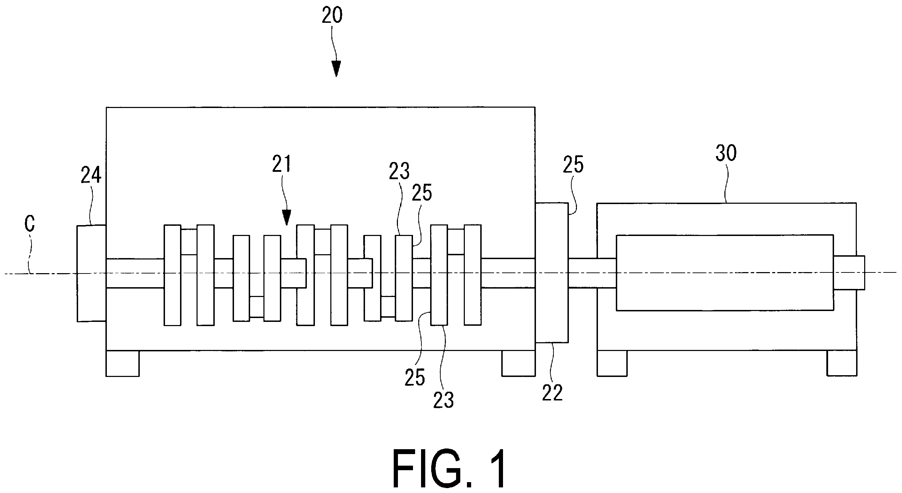

As illustrated in FIG. 1, the engine 20 includes the crankshaft (rotating object) 21. The crankshaft 21 includes a crank web 23 in which a crank pin, a counter weight and other components are integrally formed, and rotates around a rotational axis line C.

A damper 24 is attached at one end (the left end in the drawing) of the crankshaft 21. A generator 30 is connected to the other end (the right end in the drawing) of the crankshaft 21. Further, a flywheel 22 is attached between the engine 20 and the generator 30.

A measurement surface 25 that is substantially orthogonal to the rotational axis line C in a state where the crankshaft 21 is not rotated is formed on each of the flywheel 22 and the crank web 23. The vibration measurement device 10 of the present embodiment (a first sensor 11 and a second sensor 12 described later) is attached to the measurement surface 25.

Note that the measurement surface 25 is not limited to the surfaces formed on the flywheel 22 and the crank web 23, and may be any surface that is substantially orthogonal to the rotational axis line C in the state where the crankshaft 21 is not rotated.

Next, the vibration measurement device 10 is described.

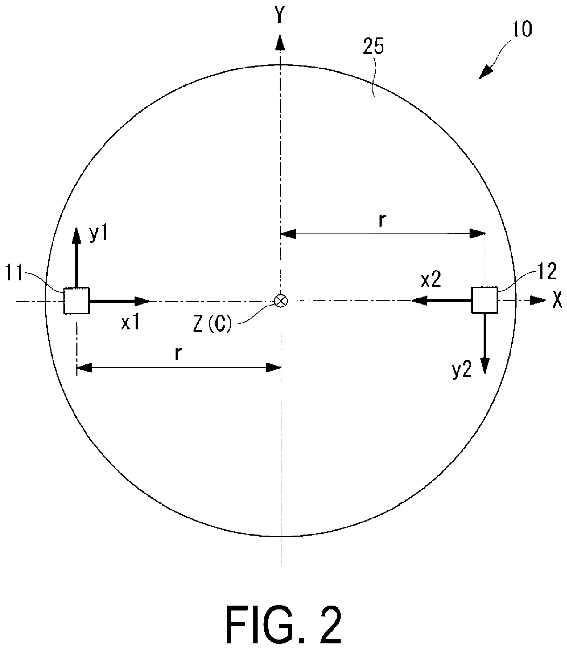

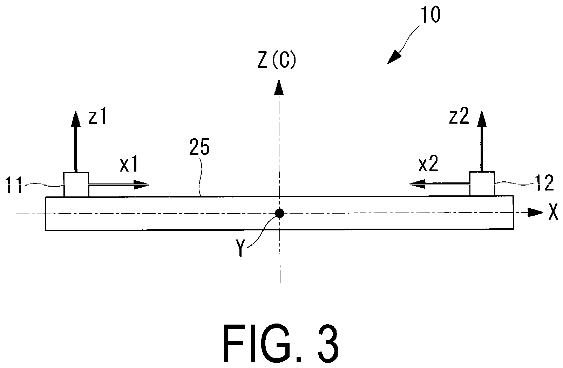

As illustrated in FIGS. 2 and 3, the vibration measurement device 10 includes the first sensor 11 and the second sensor 12. The first sensor 11 and the second sensor 12 can measure acceleration in three directions orthogonal to each other. The first sensor 11 and the second sensor 12 transmit the measured acceleration to a vibration calculating unit (not illustrated) by a telemeter.

The first sensor 11 is attached to the measurement surface 25. In FIGS. 2 and 3, the three axes of the first sensor 11 are represented by an x1 axis, a y1 axis, and a z1 axis.

The second sensor 12 is attached to the measurement surface 25 of the crankshaft 21 as with the first sensor 11. In FIGS. 2 and 3, the three axes of the second sensor 12 are represented by an x2 axis, a y2 axis, and a z2 axis.

The second sensor 12 is attached such that the second sensor 12 is rotationally symmetrical with respect to the first sensor 11 by 180 degrees about the rotational axis line C. Specifically, the first sensor 11 and the second sensor 12 are disposed on a line that passes through the rotational axis line C on the measurement surface 25 such that the first sensor 11 and the second sensor 12 are located at the same distance (r in the drawing) from the rotational axis line C in the radial direction. In other words, the rotational axis line C is a two-fold rotational axis with respect to the first sensor 11 and the second sensor 12.

The crankshaft 21 is disposed in a coordinate system with an X axis, a Y axis and a Z axis orthogonal to each other. Here, the Z axis of the coordinate system is a common axis line with the rotational axis line C. That is, the coordinate system in which the crankshaft 21 is disposed rotates and moves together with the crankshaft 21.

The three axes of the first sensor 11 and the three axes of the second sensor 12, which are both attached to the crankshaft 21, are set to have the following relationship with the coordinate system of the crankshaft 21.

Specifically, the z1 axis direction of the first sensor 11 and the z2 axis direction of the second sensor 12 coincide with the Z axis direction of the crankshaft 21, and the positive direction of the z1 axis of the first sensor 11 and the positive direction of the z2 axis of the second sensor 12 coincide with each other.

In addition, the x1 axis direction of the first sensor 11 and the x2 axis direction of the second sensor 12 coincide with the X axis direction of the crankshaft 21 orthogonal to the rotational axis of the crankshaft 21 (i.e., the Z axis), and the positive direction of the x1 axis of the first sensor 11 and the positive direction of the x2 axis of the second sensor 12 are opposite to each other.

In addition, the y1 axis direction of the first sensor 11 and the y2 axis direction of the second sensor 12 coincide with the Y axis direction orthogonal to the X axis and the Z axis of the crankshaft 21, and the positive direction of the y1 axis of the first sensor 11 and the positive direction of the y2 axis of the second sensor 12 are opposite to each other.

The measurement surface 25 vibrates in various directions along with the rotation of the crankshaft 21. This vibration can be decomposed into the following elements, for example. Specifically, the vibration can be decomposed into vibration around the rotational axis line C (the Z axis) (torsional vibration), vibration in the Y-axis direction (translation), vibration around the Y axis (i.e., inclination of the measurement surface 25 around the Y axis), vibration in the Z-axis direction (translation), and vibration in the X-axis direction (translation).

The vibration behavior of the measurement surface 25, and in turn the crankshaft 21, can be analyzed by calculating the quantity of the above-described vibrations (translation, rotation and the like).

A method of calculating the vibration in each direction using the first sensor 11 and the second sensor 12 is described below.

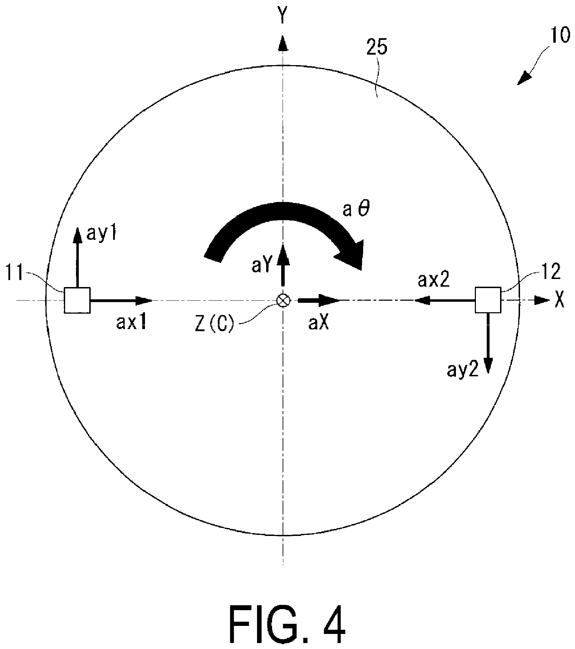

As illustrated in FIG. 4, when the measurement surface 25 vibrates (torsionally vibrates) around the rotational axis line C (the Z axis), an angular acceleration aθ around the rotational axis line C is generated at the measurement surface 25.

When the measurement surface 25 vibrates (translates) in the X-axis direction, an acceleration aX in the X-axis direction is generated at the measurement surface 25.

When the measurement surface 25 vibrates (translates) in the Y-axis direction, an acceleration aY in the Y-axis direction is generated at the measurement surface 25.

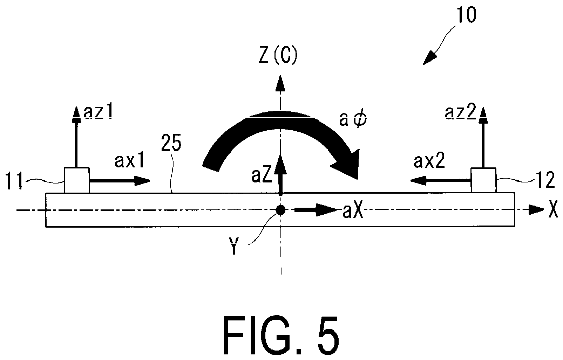

As illustrated in FIG. 5, when the measurement surface 25 vibrates around the Y axis, or in other words, when the measurement surface 25 is tilted around the Y axis, an angular acceleration acp around the Y line is generated at the measurement surface 25.

When the measurement surface 25 vibrates (translates) in the Z-axis direction, an acceleration aZ in the Z-axis direction is generated at the measurement surface 25.

The accelerations aX, aY and aZ and the angular accelerations aθ and acp described above can be calculated by appropriately combining the accelerations in the axial directions measured by the first sensor 11 and the second sensor 12. In addition, the calculated acceleration and angular acceleration can be converted into a quantity of vibration by integrating them twice.

Details of the calculation method are described below.

Vibration (Torsional Vibration) around Rotational Axis Line C (Z Axis)

As illustrated in FIG. 4, when the accelerations aX, aY and aZ and the angular accelerations aθ and acp act on the measurement surface 25, accelerations of the following Equations (1) and (2) are generated in the y1 axis direction of the first sensor 11 and the y2 axis direction of the second sensor 12.

$$\mathrm{ay1 = aY + ra\theta \cdots (1)}$$

$$\mathrm{ay2 = -aY + ra\theta \cdots (2)}$$

Here, ay1 represents acceleration in the y1 axis direction acquired from the first sensor 11, and ay2 represents acceleration in the y2 axis direction acquired from the second sensor 12.

To cancel the translation of the measurement surface 25 in the Y-axis direction, the following Equation (3) is obtained by summing Equation (1) and Equation (2).

$$\mathrm{ay1 + ay2 = 2ra\theta \cdots (3)}$$

The following Equation (4) is obtained by solving Equation (3) for aθ.

$$\mathrm{a\theta = (ay1 + ay2)/2/r \cdots (4)}$$

The acceleration ay1 is acquired from the first sensor 11, the acceleration ay2 is acquired from the second sensor 12, and r is determined in advance. Therefore, the angular acceleration aθ of the measurement surface 25 around the rotational axis line C is obtained using the Equation (4). Then, by integrating the angular acceleration aθ twice, the quantity of vibration (torsional vibration) around the rotational axis line C (Z axis) is calculated.

Vibration (Translation) in Y-axis Direction

In the Equations (1) and (2), to cancel the vibration of the measurement surface 25 around the rotational axis line C (Z axis), the following Equation (5) is obtained by subtracting Equation (2) from Equation (1).

$$\mathrm{ay1 - ay2 = 2aY \cdots (5)}$$

The following Equation (6) is obtained by solving Equation (5) for aY.

$$\mathrm{aY = (ay1 - ay2)/2 \cdots (6)}$$

Since the acceleration ay1 is acquired from the first sensor 11 and the acceleration ay2 is acquired from the second sensor 12, the acceleration aY of the measurement surface 25 in the Y-axis direction is obtained using the Equation (6). Then, by integrating the acceleration aY twice, the quantity of vibration in the Y-axis direction (translation) is calculated.

Vibration Around Y Axis (Inclination of Measurement Surface 25 around Y Axis)

When the accelerations aX, aY and aZ and the angular accelerations aθ and acp act on the measurement surface 25 as illustrated in FIG. 5, accelerations of the following Equations (7) and (8) are generated in the z1 axis direction of the first sensor 11 and the z2 axis direction of the second sensor 12.

$$\mathrm{az1 = aZ + ra\varphi \cdots (7)}$$

$$\mathrm{az2 = aZ - ra\varphi \cdots (8)}$$

Here, az1 represents acceleration in the z1 axis direction acquired from the first sensor 11, and az2 represents acceleration in the z2 axis direction acquired from the second sensor 12.

To cancel the translation of the measurement surface 25 in the Z-axis direction, the following Equation (9) is obtained by subtracting Equation (8) from Equation (7).

$$az1 - az2 = 2ra\phi \cdots (9)$$

The following Equation (10) is obtained by solving Equation (9) for acp.

$$a\phi = (az1 - az2)/2/r \cdots (10)$$

Since the acceleration az1 is acquired from the first sensor 11, the acceleration az2 is acquired from the second sensor 12, and r is determined in advance, the angular acceleration $a\phi$ of the measurement surface 25 around the Y axis is obtained using the Equation (10). Then, the quantity of vibration around the Y axis (inclination around the Y axis) is calculated by integrating the angular acceleration acp twice.

Vibration (Translation) in Z-axis Direction

In the Equations (7) and (8), to cancel the vibration of the measurement surface 25 around the Y axis, the following Equation (11) is obtained by summing Equation (7) and Equation (8).

$$az1 + az2 = 2aZ \cdots (11)$$

The following Equation (12) is obtained by solving Equation (11) for aZ.

$$aZ = (az1 + az2)/2 \cdots (12)$$

Since the acceleration az1 is acquired from the first sensor 11 and the acceleration az2 is acquired from the second sensor 12, the acceleration aZ of the measurement surface 25 in the Z-axis direction is obtained using the Equation (12). Then, the quantity of vibration (translation) in the Z-axis direction is calculated by integrating the acceleration aZ twice.

Vibration (Translation) in X-axis Direction

When the accelerations aX, aY and aZ and the angular accelerations $a\theta$ and acp act on the measurement surface 25 as illustrated in FIGS. 4 and 5, accelerations of the following Equations (13) and (14) are generated in the x1 axis direction of the first sensor 11 and the x2 axis direction of the second sensor 12.

$$ax1 = aX \cdots (13)$$

$$ax2 = -aX \cdots (14)$$

Here, ax1 represents acceleration in the x1 axis direction acquired from the first sensor 11, and ax2 represents acceleration in the x2 axis direction acquired from the second sensor 12.

The following Equation (15) is obtained by subtracting Equation (14) from Equation (13).

$$ax1 - ax2 = 2aX \cdots (15)$$

The following Equation (16) is obtained by solving Equation (15) for aX.

$$aX = (ax1 - ax2)/2 \cdots (16)$$

Since the acceleration ax1 is acquired from the first sensor 11 and the acceleration ax2 is acquired from the second sensor 12, the acceleration aX of the measurement surface 25 in the X-axis direction is obtained using the Equation (16). Then, the quantity of vibration (translation) in the X-axis direction is calculated by integrating the acceleration aX twice.

The above-described calculation of vibration (the quantity of translation, the degree of rotation, and the like) is executed by the vibration calculating unit (not illustrated) of the vibration measurement device 10, for example. The vibration calculating unit is included in a control unit (not illustrated), for example.

The control unit is composed of a central processing unit (CPU), a random access memory (RAM), a read only memory (ROM), a computer-readable storage medium and the like, for example.

Further, for example, a sequence of processing for performing various functions is stored on a storage medium or the like in the form of a program, and the various functions are performed by the CPU loading this program from the storage medium, storing the program into the RAM or the like, and executing information processing and calculation processing.

Note that the program may be preinstalled in the ROM or other storage medium, may be provided in the form of being stored in a computer-readable storage medium, or may be distributed through wired or wireless communication means, or the like.

Examples of the computer-readable storage medium include a magnetic disk, a magneto-optical disk, a CD-ROM, a DVD-ROM, a semiconductor memory, and the like.

The calculated information about vibration may be used in the following manner, for example.

Specifically, abnormalities of the vibration behavior of the crankshaft 21 may be monitored by comparing information about vibration acquired in advance through past operation, experiments or the like, and information about vibration calculated during operation.

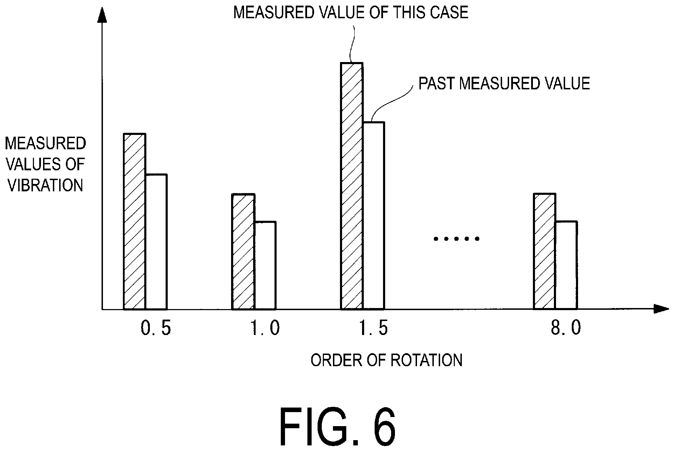

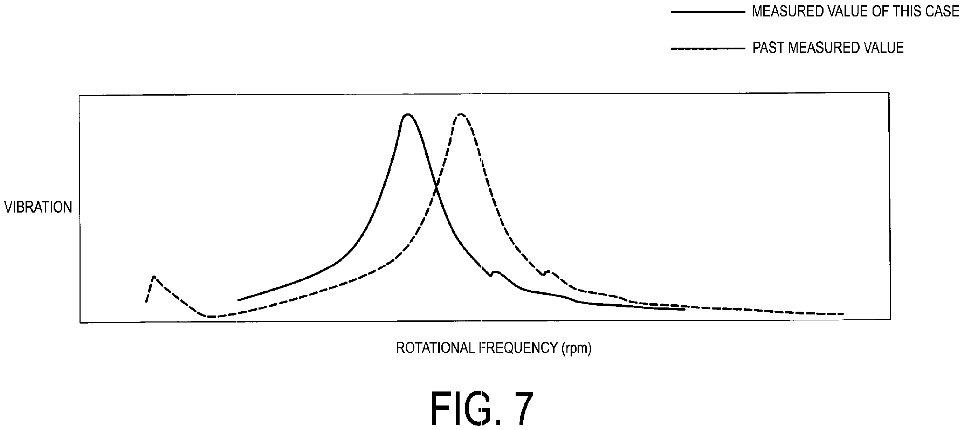

For example, when the measured value of vibration of this time is greater than the past measured value as illustrated in FIG. 6, the control unit (not illustrated) may determine that the vibration behavior of the crankshaft 21 has an abnormality. In addition, when the peak position (natural frequency) of the vibration is shifted from a peak position measured in the past as illustrated in FIG. 7, the control unit may determine that the crankshaft 21 has some abnormalities.

The comparison of the information about vibration and the detection of abnormalities are implemented by an abnormality detecting unit (not illustrated) included in the vibration measurement device 10, for example. The abnormality detecting unit is included in the above-described control unit, for example.

The present embodiment provides the following effects.

With the first sensor 11 provided at the measurement surface 25 substantially orthogonal to the rotational axis line C of the crankshaft 21 and configured to measure acceleration along the x1 axis, the y1 axis and the z1 axis orthogonal to each other, and the second sensor 12 provided at the measurement surface 25 such that the second sensor 12 is rotationally symmetrical with respect to the first sensor 11 by 180 degrees about the rotational axis line C and configured to measure acceleration along the x2 axis, the y2 axis and the z2 axis orthogonal to each other, the vibration of the measurement surface 25 can be measured using the accelerations in the directions measured by the first sensor 11 and the second sensor 12. For example, by combining and integrating the accelerations in the directions measured by the first sensor 11 and the second sensor 12 so as to cancel acceleration other than vibration in the direction to be measured, the vibration (displacement) intended to be measured can be calculated in consideration of the influence of the vibration of the crankshaft 21. In this manner, the vibration of the measurement surface 25 can be measured.

In addition, with the abnormality detecting unit configured to detect an abnormality of the crankshaft 21 by comparing information about vibration of the crankshaft 21 acquired in advance and information about vibration obtained by the vibration calculating unit, it is possible to determine that an abnormality occurs in the crankshaft 21 when a measured specific vibration is larger than a specific vibration acquired in advance, for example. As another example, it is also possible to determine that an abnormality (such as damage to the crankshaft 21) occurs in the crankshaft 21 when there is a difference between the value of the peak position of vibration acquired in advance and the value of the peak position of measured vibration.

Note that the first sensor 11 and the second sensor 12 may measure strain in addition to acceleration. With this configuration, even in a case where the first sensor 11 and the second sensor 12 are installed at a node of vibration where it is difficult to measure acceleration, the natural value of vibration can be confirmed, for example.

The embodiment described above is understood as follows.

A vibration measurement device (10) according to an aspect of the present disclosure includes a first sensor (11) provided at a measurement surface (25) that is substantially orthogonal to a rotational axis line (C) of a rotating object (21), the first sensor (11) being configured to measure accelerations along an x1 axis, a y1 axis and a z1 axis that are orthogonal to each other; and a second sensor (12) provided at the measurement surface (25) such that the second sensor (12) is rotationally symmetrical with respect to the first sensor (11) by 180 degrees about the rotational axis line (C), the second sensor (12) being configured to measure accelerations along an x2 axis, a y2 axis and a z2 axis that are orthogonal to each other.

A vibration measurement device (10) according to an aspect of the present disclosure includes a first sensor (11) provided at a measurement surface (25) that is substantially orthogonal to a rotational axis line (C) of a rotating object (21), the first sensor (11) being configured to measure accelerations along an x1 axis, a y1 axis and a z1 axis that are orthogonal to each other; and a second sensor (12) provided at the measurement surface (25) such that the second sensor (12) is rotationally symmetrical with respect to the first sensor (11) by 180 degrees about the rotational axis line (C), the second sensor (12) being configured to measure accelerations along an x2 axis, a y2 axis and a z2 axis that are orthogonal to each other. Thus, the vibration of the measurement surface (25) can be measured using the accelerations along the directions measured by the first sensor (11) and the second sensor (12). For example, by combining and integrating the accelerations in the directions measured by the first sensor (11) and the second sensor (12) so as to cancel acceleration other than the vibration in the direction to be measured, the vibration (displacement) intended to be measured can be calculated in consideration of the influence of the vibration the rotating object (21). In this manner, vibration in the axial line direction, torsional vibration, and inclination of the measurement surface (25) can be measured.

The rotating object (21) is a crankshaft of an engine, for example. In addition, the measurement surface (25) is a surface substantially orthogonal to the rotational axis line in a state where the crankshaft is not rotated, and is a surface formed at the flywheel 22 or the crank web 23, for example.

In addition, the vibration measuring device (10) according to an aspect of the present disclosure further includes a vibration calculating unit configured to calculate vibration of the rotating object (21) based on signals output from the first sensor (11) and the second sensor (12).

Because the vibration measurement device (10) according to an aspect of the present disclosure further includes a vibration calculating unit configured to calculate vibration of the rotating object (21) based on signals output from the first sensor (11) and the second sensor (12), the vibration of the measurement surface (25) can be measured using the accelerations in the directions measured by the first sensor (11) and the second sensor (12).

In addition, in the vibration measurement device (10) according to an aspect of the present disclosure, when the rotating object (21) is in an XYZ coordinate system in which a Z axis serving as a common axis line with the rotational axis line (C) rotates, a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) around the rotational axis line (C) by integrating a$\theta$ determined based on the following Equation (1)

$$a\theta = (ay1 + ay2)/2/r \ldots (1)$$

where

a$\theta$: angular acceleration of the measurement surface (25) around the rotational axis line (C),
ay1: acceleration in the direction of the y1 axis acquired from the first sensor (11),
ay2: acceleration in the direction of the y2 axis acquired from the second sensor (12), and
r: distance from the rotational axis line (C) to the first sensor (11) or the second sensor (12) on the measurement surface (25).

In the vibration measurement device (10) according to this aspect, when the rotating object (21) is in an XYZ coordinate system in which a Z axis rotates together with the rotational axis line (C), a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) around the rotational axis line (C) by integrating a$\theta$ determined based on the Equation (1). Thus, only the angular acceleration of the rotating object (21) around the rotational axis line (C) can be extracted by canceling the acceleration of the rotating object (21) in the Y-axis direction, and on the basis of this, the displacement of the measurement surface (25) around the rotational axis line (C) (the Z axis) can be calculated.

In addition, in the vibration measurement device (10) according to an aspect of the present disclosure, when the rotating object (21) is in an XYZ coordinate system in which a Z axis serving as a common axis line with the rotational axis line (C) rotates, a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) in the direction of the Y axis by integrating aY determined based on the following Equation (2)

$$aY = (ay1 - ay2)/2 \ldots (2)$$

where

aY: acceleration of the measurement surface (25) in the direction of the Y axis,
ay1: acceleration in the direction of the y1 axis acquired from the first sensor (11), and
ay2: acceleration in the direction of the y2 axis acquired from the second sensor (12).

In the vibration measurement device (10) according to this aspect, when the rotating object (21) is in an XYZ coordinate system in which a Z axis rotates together with the rotational axis line (C), a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) in the direction of the Y axis by integrating aY determined based on the Equation (2). Thus, only the acceleration of the rotating object (21) in the Y-axis direction can be extracted by canceling the angular acceleration of the rotating object (21) around the rotational axis line (C) (the Z axis), and on the basis of this, the displacement of the measurement surface (25) in the Y-axis direction can be calculated.

In addition, in the vibration measurement device (10) according to an aspect of the present disclosure, when the rotating object (21) is in an XYZ coordinate system in which a Z axis serving as a common axis line with the rotational axis line (C) rotates, a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates inclination of the measurement surface (25) around the Y axis by integrating aφ determined based on the following Equation (3)

$$a\varphi = (az1 - az2)/2/r \ \dots \ (3)$$

where

acp: angular acceleration of the measurement surface (25) around the Y axis,
az1: acceleration in the direction of the z1 axis acquired from the first sensor (11),
az2: acceleration in the direction of the z2 axis acquired from the second sensor (12), and
r: distance from the rotational axis line (C) to the first sensor (11) or the second sensor (12) on the measurement surface (25).

In the vibration measurement device (10) according to this aspect, when the rotating object (21) is in an XYZ coordinate system in which a Z axis rotates together with the rotational axis line (C), a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates inclination of the measurement surface (25) around the Y axis by integrating aφ determined based on the Equation (3). Thus, only the angular acceleration of the rotating object (21) around the Y axis can be extracted by canceling the acceleration of the rotating object (21) in the direction of the rotational axis line (C) (the Z axis), and on the basis of this, the displacement of the measurement surface (25) around the Y axis can be calculated.

In addition, in the vibration measurement device (10) according to an aspect of the present disclosure, when the rotating object (21) is in an XYZ coordinate system in which a Z axis serving as a common axis line with the rotational axis line (C) rotates, a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) in a direction of the rotational axis line (C) by integrating aZ determined based on the following Equation (4)

$$aZ = (az1 + az2)/2 \ \dots \ (4)$$

where

aZ: acceleration of the measurement surface (25) in the direction of the Z axis,

az1: acceleration in the direction of the z1 axis acquired from the first sensor (11), and

az2: acceleration in the direction of the z2 axis acquired from the second sensor (12).

In the vibration measurement device (10) according to this aspect, when the rotating object (21) is in an XYZ coordinate system in which a Z axis rotates together with the rotational axis line (C), a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) in a direction of the rotational axis line (C) by integrating aZ determined based on the Equation (4). Thus, only the acceleration of the rotating object (21) in the direction of the rotational axis line (C) (the Z axis) can be extracted by canceling the angular acceleration of the rotating object (21) around the Y axis, and on the basis of this, the displacement of the measurement surface (25) in the direction of the rotational axis line (C) (the Z axis) can be calculated.

In addition, in the vibration measurement device (10) according to an aspect of the present disclosure, when the rotating object (21) is in an XYZ coordinate system in which a Z axis serving as a common axis line with the rotational axis line (C) rotates, a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates displacement of the measurement surface (25) in the direction of the X axis by integrating aX determined based on the following Equation (5)

$$aX = (ax1 - ax2)/2 \dots (5)$$

where

aX: acceleration of the measurement surface (25) in the direction of the X axis,

ax1: acceleration in the direction of the x1 axis acquired from the first sensor (11), and

ax2: acceleration in the direction of the x2 axis acquired from the second sensor (12).

In the vibration measurement device (10) according to this aspect, when the rotating object (21) is in an XYZ coordinate system in which a Z axis rotates together with the rotational axis line (C), a direction of the z1 axis and a direction of the z2 axis coincide with a direction of the Z axis of the rotating object (21), and a positive direction of the z1 axis and a positive direction of the z2 axis coincide with each other, a direction of the x1 axis and a direction of the x2 axis coincide with a direction of an X axis of the rotating object (21), and a positive direction of the x1 axis and a positive direction of the x2 axis are opposite to each other, the X axis being orthogonal to the Z axis, a direction of the y1 axis and a direction of the y2 axis coincide with a direction of a Y axis of the rotating object (21), and a positive direction of the y1 axis and a positive direction of the y2 axis are opposite to each other, the Y axis being orthogonal to the Z axis and the X axis, and the vibration calculating unit calculates a displacement of the measurement surface (25) in the direction of the X axis by integrating aX determined based on the Equation (5). Thus, only the acceleration of the rotating object (21) in the X-axis direction can be extracted by canceling the angular acceleration of the rotating object (21) around the rotational axis line (C) (the Z axis), and on the basis of this, the displacement of the measurement surface (25) in the X-axis direction can be calculated.

In addition, the vibration measurement device (10) according to an aspect of the present disclosure includes an abnormality detecting unit configured to detect an abnormality of the rotating object (21) by comparing information about vibration of the rotating object (21) acquired in advance and information about vibration obtained by the vibration calculating unit.

The vibration measurement device (10) according to an aspect of the present disclosure includes an abnormality detecting unit configured to detect an abnormality of the rotating object (21) by comparing information about vibration of the rotating object (21) acquired in advance and information about vibration obtained by the vibration calculating unit. Thus, it is possible to determine that an abnormality occurs at the rotating object (21) when a measured specific vibration is larger than a specific vibration acquired in advance, for example. As another example, it is also possible to determine that an abnormality (such as damage to the rotating object (21)) occurs at the rotating object (21) when there is a difference between the peak position and/or the value of vibration acquired in advance and the peak position and/or the value of a measured vibration.

Here, "information acquired in advance" is information obtained from a past operation, a past experiment, or the like, for example.

In addition, in the vibration measurement device (10) according to an aspect of the present disclosure, the first sensor (11) and the second sensor (12) measure strain of the measurement surface (25).

In the vibration measurement device (10) according to an aspect of the present disclosure, the first sensor (11) and the second sensor (12) measure strain of the measurement surface (25), and thus even in a case where the first sensor (11) and/or the second sensor (12) is installed at a node of vibration where it is difficult to measure acceleration, the natural value of vibration and the like can be confirmed by measuring strain.

In addition, the rotating object (21) according to an aspect of the present disclosure includes the above-described vibration measurement device (10).

Reference Signs List

10   Vibration measurement device
11   First sensor
12   Second sensor
20   Engine (rotary machine)
21   Crankshaft (rotating object)
22   Flywheel
23   Crank web
24   Damper
25   Measurement surface
30   Generator
C    Rotational axis line

**Claims**

1.   A vibration measurement device comprising:

a first sensor provided at a measurement surface that is substantially orthogonal to a rotational axis line of a rotating object, the first sensor being configured to measure accelerations along an x1 axis, a y1 axis and a z1 axis that are orthogonal to each other; and
a second sensor provided at the measurement surface such that the second sensor is rotationally symmetrical with respect to the first sensor by 180 degrees about the rotational axis line, the second sensor being configured to measure accelerations along an x2 axis, a y2 axis and a z2 axis that are orthogonal to each other.

2.   The vibration measurement device according to claim 1, further comprising a vibration calculating unit configured to calculate vibration of the rotating object based on signals output from the first sensor and the second sensor.

3.   The vibration measurement device according to claim 2, wherein
when the rotating object is in an XYZ coordinate system in which a Z axis serving as a common axis line with the rotational axis line rotates,
a direction of the z1 axis and a direction of the z2 axis coincide with a direction of the Z axis of the rotating object, and a positive direction of the z1 axis and a positive direction of the z2 axis coincide with each other,
a direction of the x1 axis and a direction of the x2 axis coincide with a direction of an X axis of the rotating object, and a positive direction of the x1 axis and a positive direction of the x2 axis are opposite to each other, the X axis being orthogonal to the Z axis,
a direction of the y1 axis and a direction of the y2 axis coincide with a direction of a Y axis of the rotating object, and a positive direction of the y1 axis and a positive direction of the y2 axis are opposite to each other, the Y axis being orthogonal to the Z axis and the X axis, and
the vibration calculating unit calculates displacement of the measurement surface around the rotational axis line by integrating aθ determined based on the following Equation (1)

$$a\theta = (ay1 + ay2)/2/r \ldots (1)$$

where

aθ: angular acceleration of the measurement surface around the rotational axis line,
ay1: acceleration in the direction of the y1 axis acquired from the first sensor,
ay2: acceleration in the direction of the y2 axis acquired from the second sensor, and
r: distance from the rotational axis line to the first sensor or the second sensor on the measurement surface.

4.   The vibration measurement device according to claim 2, wherein
when the rotating object is in an XYZ coordinate system in which a Z axis serving as a common axis line with the rotational axis line rotates,
a direction of the z1 axis and a direction of the z2 axis coincide with a direction of the Z axis of the rotating object, and a positive direction of the z1 axis and a positive direction of the z2 axis coincide with each other,

a direction of the x1 axis and a direction of the x2 axis coincide with a direction of an X axis of the rotating object, and a positive direction of the x1 axis and a positive direction of the x2 axis are opposite to each other, the X axis being orthogonal to the Z axis,

a direction of the y1 axis and a direction of the y2 axis coincide with a direction of a Y axis of the rotating object, and a positive direction of the y1 axis and a positive direction of the y2 axis are opposite to each other, the Y axis being orthogonal to the Z axis and the X axis, and

the vibration calculating unit calculates displacement of the measurement surface in the direction of the Y axis by integrating aY determined based on the following Equation (2)

$$aY = (ay1 - ay2)/2 \ ... \ (2)$$

where

aY: acceleration of the measurement surface in the direction of the Y axis,
ay1: acceleration in the direction of the y1 axis acquired from the first sensor, and
ay2: acceleration in the direction of the y2 axis acquired from the second sensor.

5. The vibration measurement device according to claim 2, wherein
when the rotating object is in an XYZ coordinate system in which a Z axis serving as a common axis line with the rotational axis line rotates,
a direction of the z1 axis and a direction of the z2 axis coincide with a direction of the Z axis of the rotating object, and a positive direction of the z1 axis and a positive direction of the z2 axis coincide with each other,
a direction of the x1 axis and a direction of the x2 axis coincide with a direction of an X axis of the rotating object, and a positive direction of the x1 axis and a positive direction of the x2 axis are opposite to each other, the X axis being orthogonal to the Z axis,
a direction of the y1 axis and a direction of the y2 axis coincide with a direction of a Y axis of the rotating object, and a positive direction of the y1 axis and a positive direction of the y2 axis are opposite to each other, the Y axis being orthogonal to the Z axis and the X axis, and
the vibration calculating unit calculates inclination of the measurement surface around the Y axis by integrating aφ determined based on the following Equation (3)

$$a\varphi = (az1 - az2)/2/r \ ... \ (3)$$

where

acp: angular acceleration of the measurement surface around the Y axis,
az1: acceleration in the direction of the z1 axis acquired from the first sensor,
az2: acceleration in the direction of the z2 axis acquired from the second sensor, and
r: distance from the rotational axis line to the first sensor or the second sensor on the measurement surface.

6. The vibration measurement device according to claim 2, wherein
when the rotating object is in an XYZ coordinate system in which a Z axis serving as a common axis line with the rotational axis line rotates,
a direction of the z1 axis and a direction of the z2 axis coincide with a direction of the Z axis of the rotating object, and a positive direction of the z1 axis and a positive direction of the z2 axis coincide with each other,
a direction of the x1 axis and a direction of the x2 axis coincide with a direction of an X axis of the rotating object, and a positive direction of the x1 axis and a positive direction of the x2 axis are opposite to each other, the X axis being orthogonal to the Z axis,
a direction of the y1 axis and a direction of the y2 axis coincide with a direction of a Y axis of the rotating object, and a positive direction of the y1 axis and a positive direction of the y2 axis are opposite to each other, the Y axis being orthogonal to the Z axis and the X axis, and
the vibration calculating unit calculates displacement of the measurement surface in a direction of the rotational axis line by integrating aZ determined based on the following Equation (4)

$$aZ = (az1 + az2)/2 \ ... \ (4)$$

where

aZ: acceleration of the measurement surface in the direction of the Z axis,
az1: acceleration in the direction of the z1 axis acquired from the first sensor, and
az2: acceleration in the direction of the z2 axis acquired from the second sensor.

7. The vibration measurement device according to claim 2, wherein
when the rotating object is in an XYZ coordinate system in which a Z axis serving as a common axis line with the rotational axis line rotates,
a direction of the z1 axis and a direction of the z2 axis coincide with a direction of the Z axis of the rotating object, and a positive direction of the z1 axis and a positive direction of the z2 axis coincide with each other,

a direction of the x1 axis and a direction of the x2 axis coincide with a direction of an X axis of the rotating object, and a positive direction of the x1 axis and a positive direction of the x2 axis are opposite to each other, the X axis being orthogonal to the Z axis,

a direction of the y1 axis and a direction of the y2 axis coincide with a direction of a Y axis of the rotating object, and a positive direction of the y1 axis and a positive direction of the y2 axis are opposite to each other, the Y axis being orthogonal to the Z axis and the X axis, and

the vibration calculating unit calculates displacement of the measurement surface in the direction of the X axis by integrating aX determined based on the following Equation (5)

$$aX = (ax1 - ax2)/2 \ \ldots \ (5)$$

where

aX: acceleration of the measurement surface in the direction of the X axis,
ax1: acceleration in the direction of the x1 axis acquired from the first sensor, and
ax2: acceleration in the direction of the x2 axis acquired from the second sensor.

8. The vibration measurement device according to any one of claims 2 to 7, further comprising an abnormality detecting unit configured to detect an abnormality of the rotating object by comparing information about vibration of the rotating object acquired in advance and information about vibration obtained by the vibration calculating unit.

9. The vibration measurement device according to any one of claims 1 to 8, wherein the first sensor and the second sensor measure strain of the measurement surface.

10. A rotating object comprising the vibration measurement device of any one of claims 1 to 9.

FIG. 1

EP 3 875 924 A1

EP 3 875 924 A1

FIG. 2

14

## FIG. 3

FIG. 4

FIG. 5

FIG. 6

———— MEASURED VALUE OF THIS CASE

– – – – PAST MEASURED VALUE

VIBRATION

ROTATIONAL FREQUENCY (rpm)

# FIG. 7

Europäisches
Patentamt

European
Patent Office

Office européen
des brevets

# EUROPEAN SEARCH REPORT

Application Number

EP 21 15 7339

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2007/107937 A1 (SUGIURA JUNICHI [US])<br>17 May 2007 (2007-05-17)<br>* claim 5 *<br>* figures 4, 7, 8 *<br>* paragraph [0012] *<br>* paragraph [0048] *<br>* paragraph [0054] *<br>* paragraph [0072] *<br>* paragraph [0075] - paragraph [0076] *<br>* paragraph [0084] *<br>----- | 1,2,4-7,<br>10<br>3,8 | INV.<br>G01H1/00 |
| X | US 2018/313708 A1 (HAMADA HIROKI [JP] ET AL) 1 November 2018 (2018-11-01)<br>* figures 5, 8 *<br>* paragraph [0010] *<br>* paragraph [0026] *<br>* paragraph [0114] - paragraph [0119] *<br>----- | 1,2,9,10 | |
| Y | KR 2012 0068219 A (SAMSUNG HEAVY IND [KR])<br>27 June 2012 (2012-06-27)<br>* paragraph [0037] - paragraph [0038] *<br>* paragraph [0040] *<br>----- | 3,8 | TECHNICAL FIELDS SEARCHED (IPC) |
| A | US 2015/101865 A1 (MAULDIN CHARLES L [US] ET AL) 16 April 2015 (2015-04-16)<br>* paragraph [0052] *<br>----- | 8 | G01H |

The present search report has been drawn up for all claims

| Place of search | Date of completion of the search | Examiner |
|---|---|---|
| The Hague | 12 July 2021 | Lameloise, C |

EPO FORM 1503 03.82 (P04C01)

## ANNEX TO THE EUROPEAN SEARCH REPORT
## ON EUROPEAN PATENT APPLICATION NO.

EP 21 15 7339

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2021

| Patent document cited in search report | | Publication date | Patent family member(s) | | Publication date |
|---|---|---|---|---|---|
| US 2007107937 | A1 | 17-05-2007 | CA 2568119 A1<br>GB 2432176 A<br>US 2007107937 A1 | | 14-05-2007<br>16-05-2007<br>17-05-2007 |
| US 2018313708 | A1 | 01-11-2018 | EP 3370050 A1<br>JP 6677258 B2<br>JP WO2017073646 A1<br>US 2018313708 A1<br>WO 2017073646 A1 | | 05-09-2018<br>08-04-2020<br>16-08-2018<br>01-11-2018<br>04-05-2017 |
| KR 20120068219 | A | 27-06-2012 | NONE | | |
| US 2015101865 | A1 | 16-04-2015 | CA 2866567 A1<br>GB 2519232 A<br>US 2015101865 A1 | | 10-04-2015<br>15-04-2015<br>16-04-2015 |

For more details about this annex : see Official Journal of the European Patent Office, No. 12/82

**EP 3 875 924 A1**

## REFERENCES CITED IN THE DESCRIPTION

### Patent documents cited in the description

- JP 2010160105 A